# EUROPÄISCHE PATENTANMELDUNG

(11) **EP 3 342 516 A1**
(43) Veröffentlichungstag der Anmeldung: **04.07.2018**
(21) Anmeldenummer: 17150053.1
(22) Anmeldetag: 02.01.2017
(51) Int. Cl.: B23B 51/02, B22F 7/06, C22C 29/08, C22C 29/06, C22C 32/00, B28D 1/12, B23D 61/04, B23D 61/02

(54) **WERKZEUG**

(71) Anmelder: HILTI Aktiengesellschaft, 9494 Schaan (LI)
(72) Erfinder: Hellein, Robert, 3493 Hadersdorf/Kamp (AT); Gierl-Mayer, Christian, 1230 Wien (AT); Schubert, Wolf-Dieter, 1180 Wien (AT); Danninger, Herbert, 1230 Wien (AT); Müller-Grunz, Andrea, 4514 Differange (LU); Glaser, Arno, 9494 Schaan (LI); Momeni, Siavash, 9470 Buchs (CH); Moseley, Steven, 6820 Nenzing-Gurtis (AT)
(74) Vertreter: Hilti Aktiengesellschaft Corporate Intellectual Property

(57) **Zusammenfassung**

Ein Werkzeug zum maschinellen Bearbeiten von Werkstoffen hat einen Grundkörper (4, 34) und ein oder mehrere Schneiden (6, 38). Der Grundkörper (4, 34) ist aus einem niedriglegierten Stahl. Der Sockel (17, 39) ist an dem Grundkörper (4, 34) angeschweißt. Die Schneidkante (8, 41) bestehen aus einem Hartmetall. Das Hartmetall enthält wenigstens 82 Vol.-% Wolframkarbid und einen metallischen Binder aus einer Kobalt-Nickel-Basis-Legierung. Eine Härte des Hartmetalls ist größer als 1300 HV10. Der Sockel besteht aus einem gesinterten Komposit. Das Komposit ist zu 40 Vol.-% bis 60 Vol.-% aus Metalkarbid und einem metallischen Binder zusammengesetzt. Der metallische Binder besteht zu wenigstens 95 Vol.-% aus Nickel besteht. Eine Härte des Komposit ist geringer als 800 HV10.

## Beschreibung

### GEBIET DER ERFINDUNG

Die vorliegende Erfindung betrifft ein Werkzeug zum maschinellen Bearbeiten von Werkstoffen, insbesondere meißelnde Bohrer mit einem gesinterten Hartmetallkopf und rotierende Sägeblätter mit angeschweißten Schneiden aus gesintertem Hartmetall. Das Werkzeug eignet sich insbesondere zum Bearbeiten von stahlarmierten mineralischen Bauwerkstoffen.

Schneiden aus gesintertem Hartmetall weisen eine sehr hohe Härte auf, welche notwendig zum Bearbeiten der abrasiven und harten mineralischen Bauwerkstoffe ist. Die Schneiden lassen sich jedoch nur aufwändig mit einem Träger aus Stahl verbinden. Beispielsweise werden die Träger mit Aussparungen zum formschlüssigen Aufnehmen der Schneiden versehen.

US 2010/0003093 beschreibt einen Bohrer mit einem Bohrkopf aus gesintertem Hartmetall. Ein illustratives Beispiel beschreibt eine Zusammensetzung mit einem Hartstoff aus Wolframkarbid und einem Binder aus Kobalt und Nickel. Die Spitze besteht nur Wolframkarbid und Kobalt in einem Gewichtsverhältnis von 85:15. Der Nickelanteil erhöht sich schrittweise von Null an der Spitze auf 8 Gew.-% an der gesamten Materialzusammensetzung unter entsprechender Verringerung der Anteil von Wolframkarbid und Kobalt. Das Massenverhältnis von Wolframkarbid und Kobalt ist über die gesamte Höhe des Bohrkopfs konstant. Der Bohrkopf hat eine Härte von 90,3 HRa (ca. 1400 HV10) und an dem Sockel eine Härte von 87,7 HRa (ca. 1100 HV10) auf. Das unveränderliche Massenverhältnis gilt wie anhand eines Phasendiagrams erläutert als vorteilhaft für die Herstellung eines an der Spitze harten Bohrkopfs und an dem Sockel weicheren Bohrkopfs. Der weichere Sockel soll das Anbinden an den Schaft aus Stahl erleichtern. Der Sockel ist nach wie vor sehr hart verglichen zu üblichen Stählen. Eine direkte Anbindung durch Schweißen führt zu hohen Spannungen.

### OFFENBARUNG DER ERFINDUNG

Das erfindungsgemäße Werkzeug zum maschinellen Bearbeiten von Werkstoffen hat einen Grundkörper und ein oder mehrere Schneiden. Der Grundkörper ist aus einem niedriglegierten Stahl. Niedriglegierte Stähle haben Zusätze für die Veredelung von maximal 5 Gew. %, die gebräuchlichsten Zusätze sind Nickel, Chrom, Molybdän, Mangan, Silizium und Wolfram. Die Schneiden haben zumindest eine Schneidkante und einen Sockel. Der Sockel ist an dem Grundkörper angeschweißt. Die Schneidkante besteht aus einem Hartmetall. Das Hartmetall enthält wenigstens 82 Vol.-% Wolframkarbid und einen metallischen Binder aus einer Kobalt-Nickel-Basis-Legierung. Eine Härte des Hartmetalls ist größer als 1300 HV10. Der Sockel besteht aus einem gesinterten Komposit. Das Komposit ist zu 40 Vol.-% (54 Gew.-%) bis 60 Vol.-% (72 Gew.-%) aus Metallkarbid und einem metallischen Binder zusammengesetzt. Der Binder hat einen Anteil von 55 Vol.-% bis 40 Vol.-%. Der metallische Binder besteht zu wenigstens 95 Vol.-% aus Nickel. Eine Härte des Komposits ist geringer als 800 HV10. Das Metallkarbid des Komposits kann bevorzugt überwiegend durch Wolframkarbid gebildet sein, mehr bevorzugt aus Wolframkarbid bestehen. Die Härte des Hartmetalls kann bevorzugt kleiner als 1600 HV10 sein.

Die unterschiedliche Zusammensetzung des Binders in dem Arbeitsbereich und dem Sockel bewirkt eine Reduktion der Migration des metallischen Binders. Dies ist vorteilhaft, um einen Ausgleich der Härte zwischen den beiden Bereichen zu vermeiden. Ferner ergibt sich bei der Materialauswahl auch kein unterschiedliches Schrumpfverhalten während des Sinterns der ansonsten mechanisch sehr unterschiedlichen Bereiche. Hierdurch können sowohl innere mechanische Verspannungen vermieden werden und auch komplexere Geometrien durch das Sinterverfahren hergestellt werden.

Die Härte nach Vickers vom Typ HV10 ist gemäß den Vorschriften der Norm DIN EN ISO 6507-1 vom März 2006 zu messen. Die Norm sieht vereinfacht folgenden Messaufbau vor. Ein pyramidenförmiger Eindringkörper hat einen Winkel von 136 Grad an der Spitze. Der Eindringkörper wird mit einer Kraft von etwa 98 Newton in die Oberfläche eingedrückt. Die Einwirkungsdauer liegt im Bereich zwischen 10 Sekunden und 30 Sekunden. Der Quotient der Prüfkraft zu der Oberfläche des Eindrucks ist der Härtewert.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: einen Bohrer
- Fig. 2: eine schematische Darstellung eines Bohrkopfs
- Fig. 3: ein Schliffbild einer Schneide
- Fig. 4: ein Schliffbild einer Schneide
- Fig. 5: Profil der Härte
- Fig. 6: ein Schliffbild einer Schneide
- Fig. 7: einen Bohrkopf
- Fig. 8: ein Sägeblatt

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

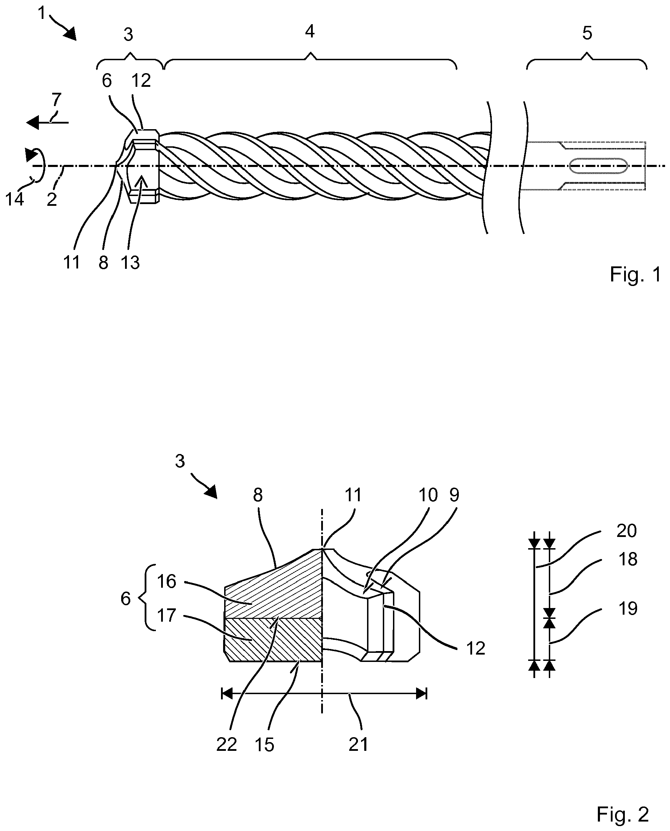

Fig. 1 zeigt schematisch vereinfacht einen beispielhaften Wendelbohrer **1** zum Bearbeiten von Gestein oder mineralischen Baumaterialien. Der Wendelbohrer **1** hat längs einer Bohrerachse **2** aufeinanderfolgend einen Bohrkopf **3,** einen tragenden Grundkörper **4** gebildet durch eine beispielsweise spiralförmige Wendel, und ein Einsteckende **5.** Fig. 2 zeigt vergrößert den Bohrkopf **3** in einem partiellen Anschnitt.

Der dargestellte Wendelbohrer **1** ist für die Bearbeitung von armiertem Gestein ausgelegt, insbesondere für eine der Drehbewegung überlagerte Meißeltätigkeit. Der Bohrkopf **3** hat drei bis sechs, beispielsweise vier, monolithisch zusammenhängende Schneiden **6.** Die Schneiden **6** haben jeweils eine in Schlagrichtung **7** weisende Schneidkante **8.** Die Schneidkanten **8** sind jeweils als Kreuzungslinie einer im Drehsinn des Bohrers **1** vorauslaufenden Fläche **9** und einer nachlaufenden Fläche **10** gebildet, die beide in Schlagrichtung **7** weisen und um wenigstens 60 Grad gegenüber der Bohrerachse **2** geneigt sind. Die Schneidkanten **8** sind in ihrer Form ausgelegt, das Gestein zu zertrümmern und ggf. eine Armierung abzuschaben. Die Schneidkanten **8** verlaufen im Wesentlichen in radialer Richtung, z.B. ausgehend von einer Spitze **11** des Bohrkopfs **3** bis zu einem Rand des Bohrkopfs **3,** wo die Schneidkanten **8** vorzugsweise gegenüber der Spitze **11** in Schlagrichtung **7** zurückgesetzt sind. Eine Neigung der Schneidkanten **8** gegenüber der Achse **2** kann in radialer Richtung konstant sein oder im Bereich der Spitze **11** geringer als am Rand sein. Insbesondere kann die Schneidkante **8** am Rand senkrecht zu der Bohrerachse **2** verlaufen. An die in Schlagrichtung **7** weisenden Schneidkanten **8** schließt sich am Rand des Bohrkopfs **3** eine Abbruchkante **12** an, welche parallel zu der der Achse **2** verläuft. Die Abbruchkante **12** steht vorzugsweise radial über die Wendel hinaus. Der Bohrkopf **3** ist an seinem Umfang mit parallel zur Bohrerachse **2** verlaufenden Abfuhrrinnen **13** versehen, entlang welchen das Bohrmehl aus dem Bohrloch transportiert werden kann. Die Abfuhrrinnen **13** sind in Umfangsrichtung **14** zwischen den Schneidkanten **8** angeordnet. Der dargestellte Bohrkopf **3** hat zwei Paare unterschiedlich ausgebildeter Schneidkanten, von denen die die Spitze **11** bildenden Schneidkanten als Hauptschneiden und das andere Paar als Nebenschneiden bezeichnet werden. Anstelle von vier kann der Bohrkopf **3** auch zwei, z.B. nur die Hauptschneiden, oder drei oder mehr als vier Schneidkanten aufweisen. Der Bohrkopf **3** hat eine von der Spitze **11** abgewandte Unterseite **15,** welche beispielsweise eben ist. Die Unterseite **15** kann in einer Ausführungsform zu der Spitze **11** hin gewölbt sein. Der Bohrkopf **3** ist mit der Unterseite **15** an der Wendel **4** angeschweißt.

Der Bohrkopf **3** mit den beispielhaft vier Schneiden **6** ist ein zusammenhängend gesinterter Körper aus zwei verschiedenen Materialien. Der Bohrkopf **3** ist längs der Achse **2** in einen oberen (Arbeits-) Bereich **16** mit den Schneidkanten **8** und einen unteren Sockel **17** mit der Unterseite **15** unterteilt, welche sich in ihrer Materialzusammensetzung unterscheiden. Der Arbeitsbereich **16** und der Sockel **17** berühren einander und sind durch einen Sinterprozess materialschlüssig miteinander verbunden. Der Arbeitsbereich **16** ist aus einem gesinterten Hartmetall. Der Sockel **17** ist aus einem gesinterten Komposit. Die Höhe **18** des Arbeitsbereichs **16** liegt beispielsweise zwischen 2 mm und 5 mm. Die Höhe **19** des Sockels **17** liegt vorzugsweise im Bereich zwischen 10 % und 50 % der Gesamthöhe **20** des Bohrkopfes **3.** Der Durchmesser **21** des Sockels **17** ist vorzugsweise etwas geringer als der Durchmesser im Arbeitsbereich **16.** Die Unterseite **15** wird von einem Sockel **17** gebildet. Der beispielhaft dargestellte Sockel **17** hat eine ebene Oberseite **22,** bei einer gewölbten Unterseite des Bohrkopfs **3** ist die Oberseite des Sockels **17** in gleicher Weise gewölbt.

Die Schneidkanten **8** sind aus einem gesinterten Hartmetall, das aus Wolframkarbid und einem metallischen Binder besteht. Andere Materialien können in Spuren von insgesamt weniger als 2 Vol.-%, beispielsweise als Verunreinigung, enthalten sein. Das Wolframkarbid ist der Hauptbestandteil des Hartmetalls, und hat einen Volumenanteil von wenigstens 82 Vol.-%. Nur der hohe Wolframkarbid-Anteil erreicht die für die Schneidkanten **8** notwendige Härte. Ferner erweisen sich andere Karbide als ungeeignet für die Schneidkanten **8.** Das Wolframkarbid liegt als Mittelkorn (medium) vor, mit einer mittleren WC-Korngröße im Bereich von 1,3 µm bis 2,5 µm, die in dem metallischen Bindermaterial eingebettet sind. Der metallische Binder ist eine Kobalt-Basis-Legierung, die einen Kobalt Anteil von wenigstens 40 Vol.-%, z.B. mehr als 80 Vol. % aufweist. Oder der metallische Binder ist vorzugsweise eine Kobalt-Nickel-Basis-Legierung, die als Hauptbestandteile Kobalt und Nickel enthält. Kobalt und Nickel haben zusammen einen Anteil von wenigstens 80 Vol.-%, bevorzugt wenigstens 85 Vol.-%, an dem Binder. Der Binder kann neben Kobalt, Nickel und gelöstem Wolfram und Kohlenstoff aus dem Wolframkarbid noch Molybdän und/oder Chrom enthalten. Sowohl Nickel als auch Kobalt haben jeweils wenigstens einen Anteil von 20 Vol.-% an dem Binder, d.h. das stöchiometrische Verhältnis von Nickel zu Kobalt liegt vorzugsweise im Bereich zwischen 2:3 bis 3:2.

Der Sockel **17** ist aus einem gesinterten Komposit aus Wolframkarbid und einem metallischen Binder gebildet. Das Wolframkarbid liegt als eingebettete Körner vor. Der Volumenanteil von Wolframkarbid an dem Komposit liegt oberhalb von 40 Vol.-%, z.B. vorzugsweise größer 45 Vol.-%, insbesondere größer als 50 Vol.-%, und unterhalb von 60 Vol.-%. Der metallische Binder des Komposits beinhaltet im Wesentlichen nur Nickel. Der Binder hat vorzugsweise nur einen geringen Anteil von Verunreinigungen, z.B. weniger als 5 Vol.-%. Der Binder hat einen Anteil von mehr als 40 Vol.-% und weniger als 60 Vol.-% an dem Komposit. Eine Härte des Komposit ist geringer als 800 HV10. Die Härte ergibt vorwiegend durch den Anteil des metallischen Binders. In einem geringeren Maß kann die Härte noch durch die Größe der Körner verändert werden.

Der Bohrkopf **3** aus den Schneidkanten **8** und dem Sockel **17** wird in einem gemeinsamen Sinterprozess hergestellt. Die Fügezone **22** zwischen den Schneidkanten **8** und Sockel **17** ergibt sich in charakteristischer Weise durch den Sinterprozess. Eine Form für den Bohrkopf **3** wird mit einem pulverförmigen Gemisch der Ausgangsmaterialien für den Sockel **17** eingefüllt. Das Gemisch enthält Körner aus Wolframkarbid, Nickelpulver und einen organischen Binder. Ein Stempel presst das Gemisch in der Form. In einem nächsten Schritt wird ein zweites pulverförmiges Gemisch der Ausgangsmaterialien für das Hartmetall des Arbeitsbereichs **16,** d.h. Körner aus Wolframkarbid, Kobalt- und Nickelpulver, und ein organischer Binder in die Form auf das erste Gemisch gefüllt. Das Gemisch wird verpresst. Der organische Binder wird durch Temperaturbehandlung entfernt. Der entstandene Braunling wird bei einer Temperatur zwischen 1300 Grad und 1450 Grad gesintert. Die metallischen Binder benetzen das Wolframkarbid. Obwohl zuvor ein mehrstufiges Einfüllen und Verpressen beschrieben wurde, bei dem zuerst das pulverförmige Gemisch für den Sockel **17** eingefüllt wird, ist es z.B. auch möglich, das umgekehrte Vorgehen zu wählen und zuerst das pulverförmige Gemisch für den Arbeitsbereich **16** einzufüllen und zu pressen oder einen einstufigen Pressvorgang durchzuführen, bei dem die Pulvermischungen für die beiden Bereiche übereinander geschichtet in die Form eingebracht und anschließend gemeinsam verpresst werden. Der Bohrkopf **3** wird mit der Bodenfläche **15** auf den Grundkörper **4** aufgeschweißt. Der Grundkörper **4** ist aus einem niedriglegiertem Vergütungsstahl. Zusätze für die Veredlung des Stahls haben einen Anteil von weniger als 5 Gew.-%. Die Bodenfläche **15** des Sockels **17** wird passgenau auf eine Stirnseite des Grundkörpers **4** aufgesetzt. Die beiden Grenzflächen sind vorzugsweise eben, alternativ in gleicher Weise gekrümmt. Das Schweißen erfolgt bei einer Temperatur von ca. 1'200 Grad Celsius, vorzugsweise per Widerstandsschweißen. Für das Schweißen typisch werden in die Schweißzone keine Metalle oder Metallgemische eingebracht, deren Schmelztemperatur unterhalb der Schmelztemperatur des Stahls liegt. Das Schweißen kann durch Zuführen eines Schweißdrahts oder einer Nickelfolie unterstützt werden.

### Beispiele 1 und Vergleichsbeispiel

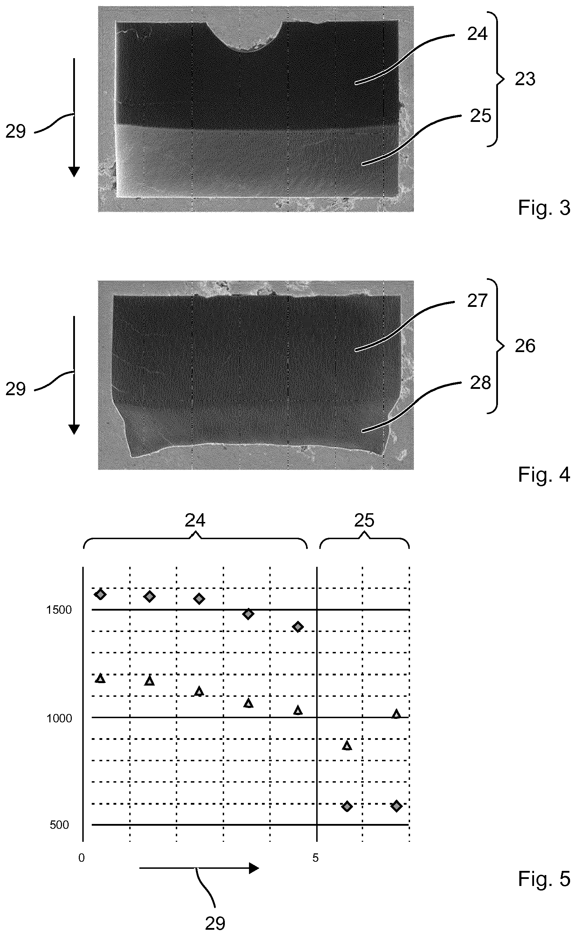

Eine erste geometrisch vereinfachte Schneide **23** mit einem Arbeitsbereich **24** aus einem Hartmetall und einem Sockel **25** aus einem gesinterten Komposit ist in Fig. 3 gezeigt. Die Hartphase des Hartmetalls ist aus Wolframkarbid. Die Hartphase hat einen Anteil von 90,0 Vol.-% (94 Gew.-%) an dem Arbeitsbereich **24.** Der Binder ist eine Kobalt-Nickel-Basis Legierung mit einem Zusatz von Molybdän. Kobalt und Nickel haben gleiche Volumenanteile. Die Hartphase des Komposits in dem Sockel **25** ist ebenfalls aus Wolframkarbid, hat allerdings nur 57 Vol.-% (70 Gew.-%) an dem Komposit. Der metallische Binder in dem Sockel **25** ist reines Nickel. Der Anteil von Nickel an dem Sockel **25** liegt bei 43 Vol.-% (30 Gew.-%).

Eine zweite geometrisch vereinfachte Schneide **26** mit einem Arbeitsbereich **27** und einem Sockel **28** ist in Fig. 4 gezeigt. Die zweite Schneide **26** unterscheidet sich von der ersten Schneide **23** nur in der Zusammensetzung des Binders im Sockel **28.** Der Binder enthält zu gleichen Anteilen Kobalt und Nickel. Ansonsten sind die beiden Schneiden **23, 26** gleich.

Die Hartphase des Hartmetalls des Arbeitsbereichs **27** ist aus Wolframkarbid. Die Hartphase hat einen Anteil von 90,0 Vol.-% (94 Gew.-%) an dem Arbeitsbereich **27.** Der Binder ist eine Kobalt-Nickel-Basis Legierung mit einem Zusatz von Molybdän. Die Hartphase des Komposits in dem Sockel **28** ist ebenfalls aus Wolframkarbid und trägt zu 57 Vol.-% (70 Gew.-%) an dem Komposit bei.

Die Braunlinge der Schneiden **23, 26** haben vor dem Sintern beide die gleiche zylindrische Form und die gleichen geometrischen Abmessungen. Erkennbar ergibt sich in der zweiten Schneide **26** eine unerwünschte Verformung des Sockels **28** gegenüber dem Arbeitsbereich **27.** Während des Sinterns verdichten sich die Materialkompositionen und in Folge schrumpft die Schneide **23, 26.** Das Schrumpfverhalten beim Sintern kann bei einfachen Geometrien durch entsprechend größere Braunlinge kompensiert werden. Nachteilig ist allerdings, dass die deutlich unterschiedlichen Anteile von Wolframkarbid zu ebenso unterschiedlichem Schrumpfverhalten führen. Bei der zweiten Schneide **26** verringern sich die Abmessungen des Sockels **25** deutlich stärker als die des Arbeitsbereichs **24.** Das unterschiedliche Schrumpfverhalten ist nicht nur allein auf die verschiedenen Materialkompositionen zurückzuführen, sondern resultiert auch aus einer effektiven Diffusion von metallischem Binder aus dem binderreichen Sockel **28** in den binderärmeren Arbeitsbereich **27.** Bei der ersten Schneide **23** konnten das unterschiedliche Schrumpfverhalten und die Diffusion durch die unterschiedliche Zusammensetzung des Binders kompensiert bzw. unterbunden werden, wie in Fig. 3 zu sehen ist. Dort enthält der Binder des Arbeitsbereichs **24** einen wesentlichen Anteil an Kobalt, wohingegen der Binder des Sockels **25** im Wesentlichen frei von Kobalt ist.

Fig. 3 zeigt einen Schliff durch den gesinterten Körper. Der Grenzbereich zwischen dem Hartmetall und dem Komposit zeigt keine Risse trotz eines großen Sprungs in der Härte. Die erste Schneide **23** eignet sich sowohl für die Bearbeitung von mineralischem Material aufgrund des sehr harten Arbeitsbereichs **24** von etwa 1600 HV10. Zudem kann der Sockel **25** auf Stahl aufgeschweißt werden, wofür die geringe Härte von etwa 600 HV10 vorteilhaft ist. Die Härte des Sockels **25** entspricht weitgehend der Härte des Stahls. Der Übergangsbereich von dem harten Arbeitsbereich **24** zu dem weichen Sockel **25** ist scharf begrenzt, was mit einer geringen Diffusion des Binders beim Sintern erklärt wird. Trotz des scharfen Übergangs ist der Übergangsbereich mechanisch stabil. Die zweite Schneide **26** erweist sich als weniger geeignet. Ein Schliff durch die zweite Schneide **26** ist in Fig. 4 gezeigt. Die vermutete Diffusion weicht den Arbeitsbereich **16** deutlich auf. Eine Härte von weniger als 1300 HV10 gilt als ungeeignet für die Bearbeitung von Gestein. Zudem kann der härtere Sockel **28** nur mühevoll auf den Schaft geschweißt werden.

Fig. 5 zeigt das Härteprofil für die beiden Schneiden **23, 26.** Die Härte der Schneiden **23, 26** sind in Abständen von etwa 1 mm entlang der Höhe **29** bestimmt. Die Messpunkte für die erste Schneide **23** sind als Karos und die Messpunkte für die zweite Schneide **26** sind als Dreiecke aufgetragen. Die erste Schneide **23** hat eine deutliche unterschiedliche Härte in dem Arbeitsbereich **24** verglichen zu dem Sockel **25.** Die Härte ist über die gesamte Höhe des Arbeitsbereichs **24** im Wesentlichen konstant, oder bleibt zumindest oberhalb von 1300 HV10, insbesondere oberhalb von 1350 HV10. Der Sockel **25** hat über seine gesamte Höhe eine geringe Härte von deutlich unter 800 HV10, beispielsweise gleich oder unterhalb von 600 HV10. Ein Ausgleich der Härte zwischen dem Arbeitsbereich **24** und dem Sockel **25** finden bei dem Kosintern für diese Schneide **23** wohl nicht statt. Die Härte hat einen starken Sprung in dem Übergangsbereich von dem Arbeitsbereich **24** zu dem Sockel **25.** Der Sprung steigt um 500 HV10 innerhalb eines Millimeters an, das Beispiel hat einen Sprung von 800 HV10 innerhalb eines Millimeters. In starken Kontrast dazu hat sich die Härte in der zweiten Schneide zwischen der Schneide und dem Arbeitsbereich angeglichen. Obwohl die Arbeitsbereiche der beiden Schneiden **23, 26** aus den gleichen Ausgangsmaterialien bestehen, ist der Arbeitsbereich bei der zweiten Schneide um mehr als 300 HV10 weicher und für einen Bohrkopf **3** nicht mehr geeignet. Der Sockel der zweiten Schneiden ist zwar noch immer weicher wie der Arbeitsbereich **16,** aber bereits so hart, dass ein Schweißen auf gängigen Stahlsorten mit hohem Aufwand verbunden ist.

Das verwendete Herstellungsverfahren für die beiden Schneiden **23, 26** ist wie folgt. Das Hartmetallpulver des Arbeitsbereichs besteht zu 90,0 Vol.-% aus Wolframkarbid-Pulver mit einer mittleren Partikelgröße um 5 µm und zu 10,0 Vol.-% aus Ausgangspulver für den Kobalt-Nickel-Basis-Binder. Das Ausgangspulver für den Kobalt-Nickel-Basis-Binder wiederum besteht aus einem Gemisch von 46 Vol.-% Kobalt-Pulver, 46 Vol.-% Nickel-Pulver und 8 Vol.-% Molybdänkarbid. Unter Zugabe eines organischen Binders wird aus dieser Hartmetall-Pulver-Mischung durch Mahlen in einem Attritor und Versprühen ein erstes Granulat hergestellt.

Das Ausgangsmaterial für das Komposit des Sockels **25** der ersten Schneide besteht zu 57 Vol.-% aus Wolframkarbid-Pulver. Eine mittlere Partikelgröße liegt im Bereich von 5 µm. Der verbleibende Anteil von 43 Vol.-% (30 Gew.-%) ist durch Nickelpulver gebildet. Das Nickel wird als Pulver mit einer Reinheit von 99,5 % bereitgestellt. Unter Zugabe eines organischen Binders wird aus dieser Partikel-Metallmatrix-Pulver-Mischung durch Mahlen im Attritor und Versprühen ein zweites Granulat für die erste Schneide **23** hergestellt.

Das Ausgangsmaterial für das Komposit des Sockels **28** der zweiten Schneide besteht zu 57 Vol.-% aus Wolframkarbid Pulver. Eine mittlere Partikelgröße liegt im Bereich von 5 µm. Der verbleibende Anteil von 43 Vol.-% ist Ausgangspulver für den metallischen Binder. Der Binder wird aus Pulver zu gleichen Volumenanteilen Nickel und Kobalt bereitgestellt. Verunreinigungen des Pulvers sind geringer als 1 %. Eine mittlere Partikelgröße liegt bei 2,5 µm. Unter Zugabe eines organischen Binders wird aus dieser Partikel-Metallmatrix-Pulver-Mischung durch Mahlen im Attritor und Versprühen ein zweites Granulat für die zweite Schneide **26** hergestellt.

Das erste Granulat und das zweite Granulat der jeweiligen Schneiden **23, 26** werden nacheinander in eine zylindrische Pressform gefüllt, die etwa den Dimensionen eines in Fig. 2 dargestellten Bohrkopfes **3** entspricht. Anschließend werden die Granulate gemeinsam in einem Prozessschritt verpresst. Der so hergestellte Grünling wird in einem Sinterofen unter Vakuum bei einer Temperatur von 1400°C dichtgesintert. Das Abkühlen erfolgt anschließend im Sinterofen.

### Beispiel 3

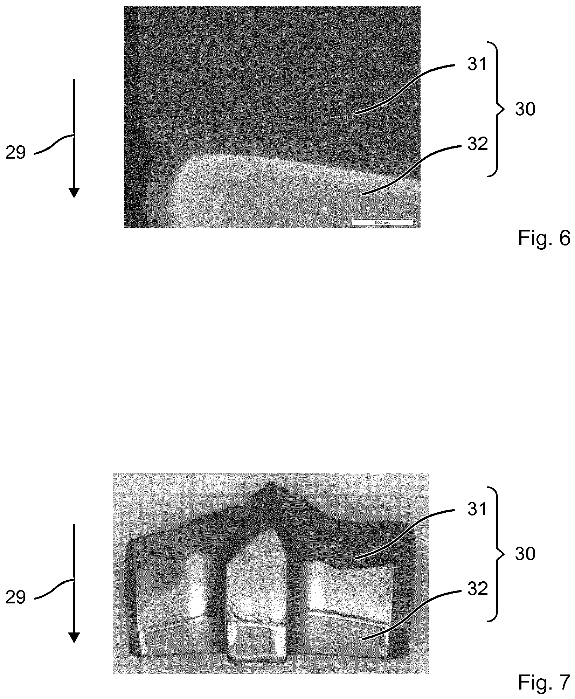

Ein weiteres Beispiel einer Schneide **30** ist ausschnittsweise in Fig. 6 gezeigt. Der Arbeitsbereich **31** besteht zu 87,3 Vol.-% (92,5 Gew.-%) aus Wolframkarbid und einem metallischen Binder bestehend aus einer Kobalt-Nickel-Basis Legierung mit einem Zusatz von Molybdän. Kobalt und Nickel haben gleiche Volumenanteile. Der Sockel **32** hat eine Hartphase aus Wolframkarbid. Der Volumenanteil der Hartphase beträgt 57 Vol.-% (70 Gew.-%) an dem Komposit. Der metallische Binder in dem Sockel **32** ist reines Nickel.

Das Herstellungsverfahren ist analog den vorhergehend beschriebenen Verfahren. Das Hartmetallpulver für den Arbeitsbereich **31** besteht zu 87,3 Vol.-% (92,5 Gew.-%) aus Wolframkarbid-Pulver mit einer mittleren Partikelgröße um 5 µm und zu 12,7 Vol.-% aus dem Ausgangspulver für den Kobalt-Nickel-Basis-Binder. Dieser Kobalt-Nickel-Basis-Binder wiederum besteht aus einem Gemisch von 46 Vol.-% Kobalt-Pulver, 46 Vol.-% Nickel-Pulver und 8 Vol.-% Molybdänkarbid. Unter Zugabe eines organischen Binders wird aus dieser Hartmetall-Pulver-Mischung durch Mahlen in einem Attritor und Versprühen ein erstes Granulat hergestellt. Das Ausgangspulver für das Komposit des Sockels **17** besteht zu 57 Vol.-% aus WC-Pulver. Eine mittlere Partikelgröße liegt im Bereich von 5 µm. Der verbleibende Anteil von 43 Vol.-% ist aus Nickel. Das Nickel wird als Pulver mit einer Reinheit von 99,5 % bereitgestellt. Unter Zugabe eines organischen Binders wird aus dieser Partikel-Metallmatrix-Pulver-Mischung durch Mahlen im Attritor und Versprühen ein zweites Granulat hergestellt. Die Granulate werden verpresst und bei 1420 °C gesintert.

Fig. 6 zeigt einen Schliff durch die gesinterte Schneide **30.** Der Grenzbereich zwischen dem Hartmetall und dem Komposit zeigt keine Risse trotz eines großen Sprungs in der Härte. Der Arbeitsbereich **31** hat eine Härte von 1433 HV10, der Sockel **32** eine Härte von 712 HV10. Der Arbeitsbereich **31** und der Sockel **32** zeigen ein annähernd gleiches Schrumpfverhalten während des Sintervorgangs. Die Längenmaße des Arbeitsbereichs **31** verringern sich um 20 %; die Längenmaße des Sockels **32** verringern sich um 20 %. Das gleiche Schrumpfverhalten wird durch geringe Migration des Binders von dem Arbeitsbereich **31** in den Sockel **32** und umgekehrt erhalten. Fig. 7 zeigt einen Bohrkopf **3** mit der gleichen Materialzusammensetzung und Sinterverfahren wie das Beispiel zu Fig. 6.

### Weitere Beispiele

Der Arbeitsbereich des Bohrkopfs mit unterschiedlichen Anteilen an Binder wurde untersucht. Die Hartphase aus Wolframkarbid ist auf 85 Vol.-% (91 Gew.-%) gegenüber dem Beispiel 1 reduziert. Der Binder hat die gleiche Zusammensetzung wie in Beispiel 1. Der Sockel hat die gleiche Komposition wie in Beispiel 1. Erwartungsgemäß verringert sich die Härte des Arbeitsbereichs aufgrund des höheren Bindergehalts. Der Arbeitsbereich hat eine Härte von 1330 HV10, der Sockel eine Härte von 550 HV10. Der Übergangsbereich, in dem die Härte ansteigt, hat eine Höhe von weniger als 1 mm, analog Fig. 5. Ein weiterer Bohrkopf hat einen Anteil von 88 Vol.-% (98 Gew.-%) Hartphase in dem Arbeitsbereich und ist ansonsten wie in Beispiel 1 zusammengesetzt. Die Härte des Arbeitsbereichs liegt bei 1400 HV10, die Härte des Sockels **32** bei 550 HV10. Der Übergangsbereich, in dem die Härte ansteigt, hat eine Höhe von weniger als 1 mm, analog Fig. 5. Die Härte des Bohrkopfs lässt sich über den Binderanteil in dem bevorzugten Härtebereich einstellen. Der Anteil von Kobalt gegenüber Nickel wurde erhöht, auch hierbei zeigte sich kein Einfluss auf das Verhalten beim Kosintern.

Ein weiteres Beispiel hat eine andere Zusammensetzung des Binders in dem Arbeitsbereich. Der Binder ist aus reinem Kobalt, ggf. mit Verunreinigungen. Der Anteil des Binders an dem Arbeitsbereich ist 43 Vol.-% (30 Gew.-%). Die Hartphase ist aus Wolframkarbid. Der Sockel ist in wie in Beispiel 1. Nach dem Kosintern hat der Arbeitsbereich eine Härte von 1340 HV10, der Sockel **39** eine Härte von 571 HV10.

Ein höherer Binderanteil in dem Sockel lässt tendenziell besseren Eigenschaften beim Schweißen erwarten. Ein Bohrkopf in der Zusammensetzung von Beispiel 1, aber mit einem Binderanteil von 45 Vol.-% (32 Gew.-%), d.h. von reinem Nickel, in dem Sockel wurde untersucht. Der untersuchte Bohrkopf hat eine Härte von 1379 HV10 in dem Arbeitsbereich und eine Härte von 618 HV in dem Sockel. Die Härte des Arbeitsbereichs hat gegenüber dem Beispiel 1 etwas verloren, ist aber für einen Bohrkopf noch von Interesse. Eine Zugabe von Al2O3, etwa 1 Gew.-% zu den Ausgangsmaterialien des Sockels erhöhte die Härte wiederum auf 1403 HV10. Ein Bohrkopf mit noch höherem Bindergehalt von 50 Vol.-% zeigte qualitativ gute Eigenschaften. Eine Beimengung von Al2O3 lässt eine ausreichende Härte erwarten.

Die Hartphase des Sockels aus Wolframkarbid ist teilweise durch Titankarbid oder Niobkarbid in weiteren Beispielen substituiert. Die Zusammensetzung der Hartphase besteht zu 90 % aus Wolframkarbid und zu 10 % aus den anderen Karbiden. Der Binder ist reines Nickel mit einem Volumenanteil von 43 Vol.-% (30 Gew.-%) wie in Beispiel 1. Bei den durchgeführten Experimenten zeigte sich eine deutliche Angleichung der Härte im Arbeitsbereich und im Sockel. Beispielsweise ist bei 10 %-igem Anteil Niobkarbid die Härte im Arbeitsbereich bei 1220 HV10 und im Sockel bei 1220 HV10.

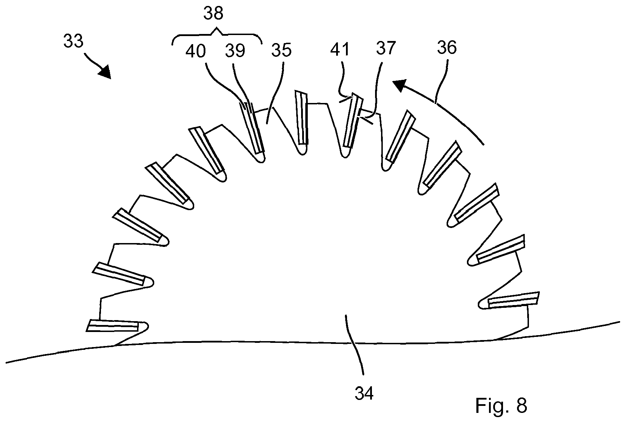

Fig.8 zeigt einen Ausschnitt eines beispielhaften scheibenförmigen Sägeblatts **33.** Das Sägeblatt **33** hat einen scheibenförmigen Grundkörper **34.** Der Grundkörper **34** ist aus einem niedriglegierten Stahl. Die Scheibe hat mehrere Zahnausnehmungen **35,** die entlang des Umfangs der Scheibe angeordnet sind. Die Zahnausnehmungen **35** haben jeweils eine in den Drehsinn **36** des Sägeblatts **33** weisende Facette **37.** Auf die Facette **37** ist eine verschleißfeste Schneide **38** aufgeschweißt. Die Schneide **38** ist aus zwei Materialien gesintert. Ein Sockel **39** der Schneide **38** besteht aus dem zuvor beschriebenen Komposit. Der Komposit hat eine Matrix aus einem metallischen Binder, der zu wenigstens 95 Vol.-% aus Nickel besteht. In der Matrix sind Partikel aus Wolframkarbid, Molybdänkarbid, Niobkarbid, Chromkarbid oder eine Mischung dieser Karbide eingebettet. Die Partikel haben einen Anteil 40 Vol.-% bis 60 Vol.-% an dem Komposit. Der in den Drehsinn weisende Arbeitsabschnitt **40** der Schneide **38** mit der Schneidkante **41** ist aus Hartmetall. Das Hartmetall hat einen sehr hohen Anteil von Wolframkarbid und einen metallischen Binder aus einer Kobalt-Nickel-Basis-Legierung oder Kobalt-Basis-Legierung.

## Patentansprüche

1. Werkzeug zum maschinellen Bearbeiten von Werkstoffen mit:
einem Grundkörper (4; 34) aus einem niedriglegierten Stahl und
einer oder mehreren gesinterten Schneiden (6; 38), die zumindest eine Schneidkante (8; 41) und einen Sockel (17; 39) aufweisen und deren Sockel (17; 39) an dem Grundkörper (4; 34) angeschweißt ist,
wobei die Schneidkante (8; 41) aus einem Hartmetall besteht, das wenigstens 82 Vol.-% Wolframkarbid und einen metallischen Binder aus einer Kobalt-Nickel-Basis-Legierung oder einer Kobalt-Basis-Legierung enthält, wobei eine Härte des Hartmetalls größer als 1300 HV10 ist, und
wobei der Sockel (17; 39) aus einem Komposit besteht, das zu 40 Vol.-% bis 60 Vol.-% aus Metalkarbid und einem metallischen Binder zusammengesetzt ist, wobei der metallische Binder zu wenigstens 95 Vol.-% aus Nickel besteht und wobei eine Härte des Komposits geringer als 800 HV10 ist.

2. Werkzeug nach Anspruch 1, **dadurch gekennzeichnet, dass** die Härte des Komposits größer als 500 HV10 ist.

3. Werkzeug nach Anspruch 1 oder 2, **dadurch gekennzeichnet, dass** die Härte des Hartmetalls geringer als 1600 HV10 ist.

4. Werkzeug nach einem der vorhergehenden Ansprüche, **dadurch gekennzeichnet, dass** Kobalt und Nickel zusammen zu wenigstens 80 Vol.-% der Kobalt-Nickel-Basis-Legierung des Hartmetalls beitragen.

5. Werkzeug nach Anspruch 4, **dadurch gekennzeichnet, dass** die Kobalt-Nickel-Basis-Legierung des Hartmetalls wenigstens 40 Vol.-% Nickel enthält.

6. Werkzeug nach einem der vorhergehenden Ansprüche, **dadurch gekennzeichnet, dass** die Kobalt -Basis-Legierung des Hartmetalls wenigstens 80 Vol.-% Kobalt enthält.

7. Werkzeug nach einem der vorhergehenden Ansprüche, **dadurch gekennzeichnet, dass** die Schneidkante an den Sockel (17; 39) angrenzt.

8. Werkzeug nach einem der vorhergehenden Ansprüche, **dadurch gekennzeichnet, dass** der Sockel (17; 39) mit einer Grundfläche an den Grundkörper (4; 34) angeschweißt ist und eine Höhe (19) des Sockels (17; 39) zwischen 10 % und 50 % der Gesamthöhe (20) der Schneide (6; 38) entspricht.

9. einem der vorhergehenden Ansprüche, **dadurch gekennzeichnet, dass** das Metallkarbid des Sockels zu wenigstens 95 Vol.-% Wolframkarbid ist oder zu wenigstens 98 Vol.-% Wolframkarbid ist oder vollständig aus Wolframkarbid ist.

10. Werkzeug nach einem der vorhergehenden Ansprüche, **dadurch gekennzeichnet dass** das Werkzeug ein Bohrer (1) ist, der einen Bohrkopf (3) mit drei bis sechs zusammenhängend gesinterten Schneiden (6) aufweist.

11. Werkzeug nach Anspruch 10 **dadurch gekennzeichnet, dass** die Schneidkanten (8) jeweils aus einer im Drehsinn des Bohrers (1) vorauslaufenden Fläche (9) und einer im Drehsinn des Bohrers (1) nachlaufenden Fläche (10) gebildet sind und die vorauslaufende Fläche (9) und die nachlaufende Fläche (10) einen stumpfen Winkel einschließen.
